# EUROPÄISCHE PATENTSCHRIFT

(11) **EP 1 429 282 B1**
(45) Veröffentlichungstag und Bekanntmachung des Hinweises auf die Patenterteilung: **31.10.2007**
(21) Anmeldenummer: 03027231.4
(22) Anmeldetag: 28.11.2003
(51) Int. Cl.: G06F 17/30, G06K 9/62

(54) **Bilderkennung und sprachliche Beschreibung**
Image recognition and textual description
Reconnaissance et description textuelle d'images

(30) Priorität: 12.12.2002 DE 10258032
(43) Veröffentlichungstag der Anmeldung: 16.06.2004
(73) Patentinhaber: Deutsche Telekom AG, 53113 Bonn (DE)
(72) Erfinder: Bindel, Frank, 53639 Königswinter (DE); Brackmann, Ludwig, Dipl.-Ing., 53225 Bonn (DE)
(74) Vertreter: Braun-Dullaeus, Karl-Ulrich

(56) Entgegenhaltungen:
- US-A- 5 845 288
- US-A- 5 930 783
- US-A1- 2001 056 342
- BOURBAKIS N G; KAVRAKI D: "An intelligent assistant for navigation of visually impaired people" PROCEEDINGS 2ND ANNUAL IEEE INTERNATIONAL SYMPOSIUM ON BIOINFORMATICS AND BIOENGINEERING (BIBE 2001), 4. November 2001 (2001-11-04), - 6. November 2001 (2001-11-06) Seiten 230-235, XP010570475 Bethesda, MD
- KUCHINSKY A; ET AL: "FOTOFILE: A CONSUMER MULTIMEDIA ORGANIZATION AND RETRIEVAL SYSTEM" PROC. CONF. ON HUMAN FACTORS IN COMPUTING SYSTEMS, 15. Mai 1999 (1999-05-15), - 20. Mai 1999 (1999-05-20) Seiten 496-503, XP002940354 New York, NY

## Beschreibung

Die vorliegende Erfindung betrifft ein Verfahren zur automatischen Erkennung eines Inhalts und/oder eines Objektes als Bestandteil einer bildlichen Gesamtdarstellung, wobei die Gesamtdarstellung in digitalisierter Form vorliegt und wobei einzelne Bestandteile von einem Programm zur Bilderkennung extrahiert werden. Zudem betrifft die Erfindung ein System zur Umsetzung des Verfahrens.

In der heutigen Zeit gibt es schon zahlreiche Anwendungen, die Programme zur Bilderkennung nutzen. Dabei werden wegen der Komplexität der Aufgabe oft ganz allgemein künstliche Intelligenz und insbesondere neuronale Netzwerke eingesetzt, mit denen sich Lerneffekte und damit entsprechend erhöhte Verarbeitungsgeschwindigkeiten erzielen lassen. Typischerweise steuern solche Programme Prozesse, in denen Werkstücke oder Gegenstände erkannt und manipuliert werden sollen. Die Programme sind dabei in gewisser Weise auf die zu erkennenden Gegenstände "trainiert". Gerade im Falle von Robotern, die bei den komplexen Bewegungsabläufen ihre Umwelt wahrnehmen müssen, leisten Algorithmen zur Bilderkennung gute Dienste. Die Programme "erkennen" dabei insofern den Inhalt der sich ihnen darbietenden Gesamtdarstellung, als zwischen den abgebildeten Strukturen und den in Datenbanken gespeicherten Objekten Übereinstimmungen entdeckt werden. Zwar ist auf diese Weise eine "Erkennung" der Bilder möglich. Eine Beschreibungen der Bilder im Sinne einer Umsetzung des Inhaltes in Text kann so allerdings nicht realisiert werden.

Bildbeschreibungen dieser Art sind jedoch notwendig, wenn bestimmte Bilder gesucht und damit also aus einer großen Menge angebotener Bilder anhand vorgebbarer Kriterien ausgewählt werden sollen. So sind eine Reihe von Bildern über das Internet suchbar, denen eine Beschreibung als Text manuell zugeordnet worden ist. Über den vorgegebenen Beschreibungstext lässt sich dann das Bild von einer Suchmaschine finden. Nachteilig an den bekannten Techniken ist jedoch, dass es einerseits verhältnismäßig umständlich ist, den Bildern einen Text zuzuordnen, und dass andererseits durch die manuelle Zuordnung kaum eine Standardisierung der Beschreibungen möglich ist. Wegen dieser Schwierigkeiten ist das Potential von den bekannten Bildsuchfunktionen vergleichsweise beschränkt

Kuchinsky et al., "Fotofile: A Consumer Multimedia Organization and Retrieval System" (Proc. Conf. on Human Factors in Computer Vision, 1999) beschreibt ein System zur Erzeugung textueller Metainformationen für Bildsammlungen. Bourbakis und Kavraki, "An intelligent assistant for navigation of visually impaired people" (Proc. 2nd Annual IEEE Intl. Symposium on Bioinformatics and Bioengineering, 2001) offenbart ein System zur Unterstützung sehbehinderter Personen, welches Objekte in Bildern erkennt und diese dann akustisch ausgibt.

Aufgabe der Erfindung ist es nunmehr, ein Verfahren zur Bildbeschreibung zu schaffen, das sich einfach und mit kostengünstigen Mitteln umsetzen lässt und mit dem sich die Inhalte einer Vielzahl vorgebbarer Bilder automatisch analysieren lassen, wobei im Rahmen der Analyse Datensätze und dabei insbesondere Beschreibungstexte entstehen, die den in einer Datei zu archivierenden Bildern zum Zwecke einer vereinfachten Suche zugeordnet werden können. Außerdem soll ein System zur Umsetzung des Verfahrens geschaffen werden.

Diese Aufgaben werden durch das Verfahren mit den kennzeichnenden Merkmalen des Anspruch 1 und das System nach Anspruch 9 gelöst.

Der Kerngedanke der Erfindung liegt darin, vorgegebene Bilder automatisch auf Bestandteile, insbesondere auf prägende Bestandteile, abzusuchen, dann den gefundenen Bestandteilen einen Beschreibungstext zuzuordnen und den Text in Verbindung mit dem kompletten Bild zu speichern. Im Folgenden wird der Terminus "Beschreibungstext" synonym gebraucht für das allgemeinere Merkmal "Datensatz". Dabei wird die Erfindung derart umgesetzt, dass zur Erkennung zunächst aus dem Bild ein Bestandteil anhand seiner Form oder Farbe ausgesucht und dann isoliert wird, wobei als Bestandteil auch das komplette Bild angesehen werden kann. Danach wird der Ausschnitt mit dem Inhalt einer Musterdatei verglichen, wobei die Musterdatei eine Vielzahl verschiedener Bestandteile von mehr oder minder großer Komplexität enthält. Neben der Vielzahl einzelner Repräsentationen enthält die Musterdatei jeweils eine dem jeweiligen Bildbestandteil zugeordnete und als Textdatei zur Verfügung stehende kleine Bildbeschreibung. Im Falle einer Wiedererkennung, also bei zumindest weitgehender Erfüllung vorgebbarer Vergleichskriterien, wird der dem Bildbestandteil zugeordnete Text in Verbindung mit der Gesamtdarstellung, in diesem Falle dem kompletten Bild, gespeichert.

Mit anderen Worten ausgedrückt, werden die Bilder zunächst je nach ihrer Komplexität in einen oder mehrere Bestandteile zerlegt, dann werden die Bestandteile mit den in einer Musterdatei gespeicherten Repräsentationen von Bestandteilen verglichen. Neben den Repräsentationen sind in der Musterdatei Beschreibungstexte gespeichert. Werden in einer Darstellung ein oder mehrere Bestandteile wiedererkannt, dann wird die als Text vorliegende Beschreibung eines jeden Bestandteiles genommen und der komplette Text aus der Summe der einzelnen Textbausteine in Verbindung mit der Gesamtdarstellung gespeichert. In einer besonders vorteilhaften Ausführungsform werden Form und Farbe eines Bestandteils getrennt bewertet und mit entsprechenden Vorbildern in der Musterdatei verglichen. Form und Farbe sind dabei wie getrennte Bestandteile zu behandeln. Insgesamt ähnelt dieses Verfahren der Bilderkennung der Systematik einer bekannten Texterkennung, bei der ein als Bilddatei vorliegendes Schriftstück in Buchstaben zerlegt, die Buchstaben erkannt und zu sinntragenden Begriffen zusammengesetzt werden, bevor die so erstellte Textdatei gespeichert wird.

Generell kann das erfindungsgemäße Verfahren zur Bildbeschreibung in vielen Bereichen eingesetzt werden. Beispielsweise können damit optische Eindrücke und visuelle Informationen für Sehbehinderte oder Blinde verständlich gemacht werden. Dabei ist es vorteilhaft, wenn der dem Bild zugeordnete Text über eine "Text to Speech" Funktion in Sprache konvertiert und einem Nutzer "vorgelesen" wird. Diese Ausführung ist gerade für Sehbehinderte besonders interessant, die damit bildliche Darstellungen oder auch visuelle Eindrücke aus ihrer Umgebung vorgetragen bekommen.

Insbesondere aber nicht ausschließlich für diesen Personenkreis liegt eine besonders vorteilhafte Anwendung der Erfindung darin, die mit Text versehene Gesamtdarstellung für einen Zugriff über ein Netz, insbesondere das Internet, zur Verfügung zu stellen. Über den zugeordneten Text ist das Bild dann als Gesamtdarstellung von den bekannten Suchmaschinen findbar.

Die Vorteile der Erfindung liegen auf der Hand: Dadurch, dass zu beliebigen Bildern passende Beschreibungstexte generiert werden können, lassen sich neben den Textseiten auch eine Vielzahl von Bildern als separate Darstellungen oder als Teil der Textseiten für die bekannten Suchmaschinen findbar machen. Dabei ist der Begriff "Bild" ganz allgemein zu verstehen. Auch der Inhalt von Grafiken als Visualisierung einer Information, beispielsweise ein gewisser Kurvenverlauf, kann in Text umgesetzt werden. Durch die Erfindung erschließt sich den Suchmaschinen eine bislang nur rudimentär zugängliche Welt. Dies bedeutet einerseits für den Anwender eine Verbesserung der Möglichkeiten bei der Informationsbeschaffung, während andererseits sich für den Anbieter der Information oder den Provider des Datennetzes ein neues Geschäftsfeld auftut.

Die Effizienz der erfindungsgemäßen Bildbeschreibung hängt in starkem Maße davon ab, inwieweit ein aus dem Bild extrahierter Bestandteil abstrahiert werden kann. Dazu wird dieser von überflüssigen oder unbedeutend erscheinenden Details befreit und auf das eigentlich interessierende Objekt reduziert. Ist z.B. ein Sonnenuntergang am Meer dargestellt ist, so kann auf den Stamm der Palme, der sich zufällig und eher störend durch das Bild zieht, verzichtet werden.

Darüber hinaus hängt die Effizienz der erfindungsgemäßen Bildbeschreibung entscheidend vom Umfang der Musterdatei ab, die vom Anbieter gepflegt werden muss, wobei die Pflege im wesentlichen darin besteht, den Inhalt ständig zu erweitern. Dabei stellt die manuelle Eingabe eine besonders einfach zu realisierende Art der Eingabe dar. Der Vorteil der manuellen Eingabe liegt darin, dass die Inhalte zuverlässiger erfasst und mit umfangreicher Beschreibung versehen werden können. Der Nachteil liegt jedoch in dem vergleichsweise hohen Aufwand. Um diesen zu verringern und gleichzeitig einen hohen Grad an Standardisierung zu erreichen, werden bei einer anderen vorteilhaften Ausführungsform der Erfindung die Inhalte automatisch in die Musterdatei eingegeben, indem über ein Netz, insbesondere das Internet, nach darin enthaltenen und mit versehenen Text Darstellungen gesucht wird. Diese Darstellungen werden in die Musterdatei aufgenommen. Das System kann durch Vorgabe von Bildern bekannten Inhalts in gewisser Weise "angelernt" werden. Bei ausreichender Menge in der Musterdatei gespeicherter Bilder können eine Vielzahl zu einem Themenkomplex gehörende Bilder auf ihre statistischen Gemeinsamkeiten betreffend beispielsweise ihre Farb- und/oder Forminhalte untersucht werden. Ein vorgegebenes Bild wird dann "wiedererkannt" wenn lokale Maxima von Übereinstimmungen aufgefunden werden.

In einer zu bevorzugenden Ausführungsform wird die Wiedererkennung mit einem Comparatorprogramm bewerkstelligt, das sich unscharfer Kriterien ("Fuzzy Logik") bedient. Gerade auf diesem Gebiet, wo der extrahierte Bestandteil mit Sicherheit nicht genau der Repräsentation in der Musterdatei entspricht, tragen solche unscharfen Kriterien zur Verbesserung der Wiedererkennung bei. Ein weiterer Schritt, hin zu einer höheren Trefferquote wird dadurch getan, dass die Wiedererkennung mit einem Comparatorprogramm bewerkstelligt wird, das sich lernfähiger Algorithmen bedient.

In einem System lässt sich die Erfindung umsetzen unter Benutzung eines Aufnahmemittels, das die Gesamtdarstellung erfasst und in ein digitales Bild wandelt, eines Extraktionsmittels aufweisend ein Computerprogramm, das aus der Gesamtdarstellung einen bildlichen Bestandteil extrahiert, einer Komparatorstufe aufweisend ein Comparatorprogramm, die den Bestandteil mit dem Inhalt der Musterdatei vergleicht, und einen Umsetzer, der bei Erkennung eines Bestandteils in der Musterdatei den zugeordneten Textbaustein registriert, gegebenenfalls zu vorhandenem Text addiert und in Beziehung zur Gesamtdarstellung setzt.

## Patentansprüche

1. Verfahren zur automatischen Erkennung eines Inhalts und/oder eines Objektes als Bestandteil einer bildlichen Darstellung, wobei die Darstellung in digitalisierter Form vorliegt und wobei einzelne Bestandteile von einem Programm zur Bilderkennung extrahiert werden,
und
jeweils ein extrahierter Bestandteil verglichen wird mit den Inhalten einer Musterdatei, wobei die Musterdatei eine Vielzahl von Repräsentationen einzelner Bildbestandteile, sowie jeweils eine einem Bildbestandteil zugeordnete und als Datensatz in Form eines Textes zur Verfügung stehende Beschreibung des Bildbestandteils aufweist, -
wobei bei positivem Vergleich (Wiedererkennung) eines Bildbestandteils der zugeordnete Text in Verbindung mit der Darstellung dauerhaft gespeichert wird, **dadurch gekennzeichnet, dass** der zugeordnete Text über eine Text to Speech Funktion in Sprache konvertiert und einem Nutzer vorgelesen wird.

2. Verfahren nach Anspruch 1
**dadurch gekennzeichnet, dass** von einem Bestandteil Form und Farbe getrennt separiert und mit Vorbildern aus der Musterdatei verglichen werden.

3. Verfahren nach Anspruch 1 oder 2,
**dadurch gekennzeichnet, dass** die Inhalte manuell in die Musterdatei eingegeben werden.

4. Verfahren nach einem der vorherigen Ansprüche,
**dadurch gekennzeichnet, dass** die Inhalte automatisch in die Musterdatei eingegeben werden, indem über ein Netz, insbesondere das Internet, nach Darstellungen mit zugeordnetem Text gesucht wird.

5. Verfahren nach einem der vorherigen Ansprüche,
**dadurch gekennzeichnet, dass**dieDarstellungfüreinen Zurgiff über ein Netz, insbesondere das Internet, zur Verfügung gestellt wird, wobei die Darstellung von Suchmaschinen anhand der zugeordneten Texte findbar ist.

6. Verfahren nach einem der vorherigen Ansprüche,
**dadurch gekennzeichnet, dass** die in der Musterdatei enthaltenen Darstellungen mit Text auf ihre statistische Gemeinsamkeiten untersucht werden.

7. Verfahren nach einem der vorherigen Ansprüche,
**dadurch gekennzeichnet,**I dass die Wiedererkennung mit einem Comparatorprogramm bewerkstelligt wird, das sich unscharfer Kriterien ("Fuzzy Logik") bedient.

8. Verfahren nach einem der vorherigen Ansprüche,
**dadurch gekennzeichnet, dass** die Wiedererkennung mit einem Comparatorprogramm bewerkstelligt wird, das sich lernfähiger Algorithmen bedient.

9. System zur Umsetzung des Verfahrens nach einem der vorherigen Ansprüche umfassend
ein Aufnahmemittel, das die Darstellung erfasst und in ein digitales Bild wandelt,
ein Extraktionsmittel aufweisend ein Computerprogramm, das aus der Darstellung einen bildlichen Bestandteil extrahiert,
eine Komparatorstufe aufweisend ein Comparatorprogramm, das den Bestandteil mit dem Inhalt der Musterdatei vergleicht, und
einen Umsetzer, der bei Erkennung eines Bestandteils in der Musterdatei den zugeordneten Textbaustein registriert, gegebenenfalls zu vorhandenem Text addiert und in Beziehung zur Darstellung setzt.

## Claims

1. Method for automatic recognition of a content and/or of an object as an element of a graphical representation, wherein the representation is present in digitized form and wherein individual elements are extracted by an image recognition program, and one extracted element at a time is compared with the contents of a pattern file, wherein the pattern file has a plurality of representations of individual image elements and in each case also has a description associated with an image element that is available as a data record in text form, wherein in the event of a positive comparison (recognition) of an image element the associated text is permanently stored in connection with the representation,
**characterized in that** the associated text is converted to language by means of a text-to-speech function and is read out to a user.

2. Method according to claim 1,
**characterized in that** shape and color are independently separated from an element and compared with models from the pattern file.

3. Method according to claim 1 or 2,
**characterized in that** the content items are entered into the pattern file manually.

4. Method according to any one of the preceding claims,
**characterized in that** the content items are entered into the pattern file automatically by searching through a network, especially the Internet, for representations with associated text.

5. Method according to any one of the preceding claims,
**characterized in that** the representation is made available for access through a network, especially the Internet, wherein the representation can be found by search machines on the basis of the associated texts.

6. Method according to any one of the preceding claims,
**characterized in that** the representations with text contained in the pattern file are examined for their statistical commonalities.

7. Method according to any one of the preceding claims,
**characterized in that** the recognition is accomplished with a comparator program that uses fuzzy logic.

8. Method according to any one of the preceding claims,
**characterized in that** the recognition is accomplished with a comparator program that uses algorithms capable of learning.

9. System for implementing the method according to any one of the preceding claims, comprising
a recording means, which acquires the representation and converts it into a digital image,
an extraction means having a computer program that extracts an image element from the representation,
a comparator stage having a comparator program that compares the element with the content of the pattern file, and
a converter, which, when an element is recognized, registers the associated text module, adds it to existing text if applicable, and places it in relationship to the representation.

## Revendications

1. Procédé de reconnaissance automatique d'un contenu et/ou d'un objet comme étant un composant d'une représentation en images, la représentation existant sous forme numérisée et des composants individuels étant extraits par un programme de reconnaissance d'images et un composant extrait étant respectivement comparé aux contenus d'un fichier modèle, le fichier modèle comportant une pluralité de représentations de composants individuels d'image ainsi qu'une description du composant d'image associée à un composant d'image et disponible comme ensemble de données sous la forme d'un texte, ledit texte associé étant, en cas de comparaison positive (reconnaissance) d'un composant d'image, enregistré de manière permanente en association avec la représentation, **caractérisé en ce que** le texte associé est converti en parole par une fonction de conversion texte-parole et lu à l'utilisateur.

2. Procédé selon la revendication 1, **caractérisé en ce que** l'on sépare individuellement la forme et la couleur d'un composant pour les comparer à des modèles provenant du fichier modèle.

3. Procédé selon la revendication 1 ou 2, **caractérisé en ce que** les contenus sont entrés manuellement dans le fichier modèle.

4. Procédé selon l'une des revendications précédentes, **caractérisé en ce que** les contenus sont entrés automatiquement dans le fichier modèle en recherchant, par l'intermédiaire d'un réseau, notamment de l'internet, des représentations avec texte associé.

5. Procédé selon l'une des revendications précédentes, **caractérisé en ce que** la représentation est fournie pour un accès par un réseau, notamment par l'internet, la représentation de moteurs de recherche pouvant être trouvée sur la base des textes associés.

6. Procédé selon l'une des revendications précédentes, **caractérisé en ce que** les représentations avec texte contenues dans le fichier modèle sont examinées pour déceler leurs points communs au point de vue statistique.

7. Procédé selon l'une des revendications précédentes, **caractérisé en ce que** la reconnaissance est réalisée à l'aide d'un programme comparateur qui se sert de critères flous (« fuzzy logic » = logique floue).

8. Procédé selon l'une des revendications précédentes, **caractérisé en ce que** la reconnaissance est réalisée à l'aide d'un programme comparateur qui se sert d'algorithmes capables d'apprentissage.

9. Système de mise en oeuvre du procédé selon l'une des revendications précédentes comprenant
un moyen d'acquisition qui capture la représentation et la convertit en une image numérique,
un moyen d'extraction comportant un programme d'ordinateur qui extrait un composant d'image de la représentation,
un étage comparateur comportant un programme comparateur qui compare le composant au contenu du fichier modèle, et
un convertisseur qui, en cas de reconnaissance d'un composant dans le fichier modèle, enregistre le module de texte associé, l'ajoute, le cas échéant, à un texte existant et établit un rapport entre le module de texte et la représentation.
